(19) Europäisches Patentamt
European Patent Office
Office européen des brevets

(11) **EP 4 503 656 A1**

(12) **EUROPEAN PATENT APPLICATION**
published in accordance with Art. 153(4) EPC

(43) Date of publication:
**05.02.2025 Bulletin 2025/06**

(21) Application number: **23790963.5**

(22) Date of filing: **21.03.2023**

(51) International Patent Classification (IPC):
***H04W 4/02*** (2018.01)

(52) Cooperative Patent Classification (CPC):
**H04W 4/02; H04W 64/00**

(86) International application number:
**PCT/CN2023/082654**

(87) International publication number:
**WO 2023/202302 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 CN 202210419306**

(71) Applicant: **Huawei Technologies Co., Ltd.
Shenzhen, Guangdong 518129 (CN)**

(72) Inventors:
• **YANG, Ganghua
Shenzhen, Guangdong 518129 (CN)**
• **LI, Xu
Shenzhen, Guangdong 518129 (CN)**
• **LV, Yibo
Shenzhen, Guangdong 518129 (CN)**
• **NI, Rui
Shenzhen, Guangdong 518129 (CN)**
• **LI, Yanchun
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **POSITIONING METHOD AND COMMUNICATION APPARATUS**

(57) This application discloses a positioning method and a communication apparatus. The method includes: A first device receives a first signal sent by a second device, receives a second signal sent by a third device, and determines a first length based on first time, second time, and delay duration. The first time is time at which the first device receives the first signal. The second time is time at which the first device receives the second signal. The first length is a distance from an intersection point of a first straight line on which a terminal device is located and a first transmission line between a first network device and a second network device to the second network device, and the first straight line is perpendicular to the first transmission line. The terminal device is one of the first device and the second device, and the first network device is the other one of the first device and the second device. According to the method provided in embodiments of this application, even if there are two network devices, the terminal device can be positioned, and the method is applicable to a plurality of application scenarios, for example, is applicable to positioning in a subway or a tunnel.

FIG. 4

EP 4 503 656 A1

**Description**

**CROSS-REFERENCE TO RELATED APPLICATIONS**

This application claims priority to Chinese Patent Application No. 202210419306.5, filed with the China National Intellectual Property Administration on April 20, 2022 and entitled "POSITIONING METHOD AND COMMUNICATION APPARATUS", which is incorporated herein by reference in its entirety.

**TECHNICAL FIELD**

This application relates to the field of positioning technologies, and in particular, to a positioning method and a communication apparatus.

**BACKGROUND**

The latest 3rd generation partnership project (3rd generation partnership project, 3GPP) standard supports a plurality of positioning technologies, including a time difference of arrival (time difference of arrival, TDOA)-based positioning technology. TDOA positioning needs at least three base stations to determine a position of a terminal device, and an application scenario is limited.

**SUMMARY**

This application provides a positioning method and a communication apparatus, so that even if there is one network device or two network devices, a terminal device can be positioned, and this application is applicable to a plurality of positioning scenarios.

According to a first aspect, an embodiment of this application provides a positioning method. The method may be performed by a first communication apparatus. The first communication apparatus may be a communication device or a communication apparatus, for example, a chip system, that can support the communication device in implementing a function needed by the method. An example in which the communication device is a first device is used below for description. For example, the first communication apparatus is a first device, a chip disposed in the first device, or another component configured to implement a function of the first device. The method includes the following steps.

The first device receives a first signal sent by a second device, receives a second signal sent by a third device, and determines a first length based on first time, second time, and delay duration. The first time is time at which the first device receives the first signal. The second time is time at which the first device receives the second signal. The first length is a distance from an intersection point of a first straight line on which a terminal device is located and a first transmission line between a first network device and a second network device to the second network device, and the first straight line is perpendicular to the first transmission line. The terminal device is one of the first device and the second device, and the first network device is the other one of the first device and the second device. In other words, the first device is the terminal device, and the second device is the first network device; or the first device is the first network device, and the second device is the terminal device. The third device is the second network device.

In this embodiment of this application, a position of the terminal device is determined by determining the distance, that is, the first length, from the intersection point of the straight line on which the terminal device is located and the first transmission line between the two network devices to any network device. For example, the first network device sends the first signal, and the second network device receives the first signal, and sends the second signal after the delay duration elapses. The terminal device may receive the first signal from the first network device, receive the second signal from the second network device, and determine the first length based on a time difference between receiving the first signal and receiving the second signal and the delay duration. For another example, the terminal device sends the first signal, and the second network device receives the first signal, and sends the second signal after the delay duration elapses. The first network device may receive the first signal from the terminal device, receive the second signal from the second network device, and determine the first length based on a time difference between receiving the first signal and the second signal and the delay duration. It can be learned that, according to the method provided in this embodiment of this application, even if there are two network devices, the terminal device can be positioned, and the method is applicable to a plurality of application scenarios, for example, is applicable to positioning in a subway or a tunnel.

In a possible implementation, that the first device determines the first length based on the first time, the second time, and the delay duration includes: The first device determines the first length according to a first formula, where the first formula satisfies:

$d2=[(t5-t2)-T]\times c1/2$, where d2 is the first length, t5 is the second time, t2 is the first time, T is the delay duration, and c1 is a transmission speed of an electromagnetic wave on the first transmission line.

In a possible implementation, position information of the terminal device includes the first length and/or a second length, and the second length is a difference between a length of the first transmission line and the first length.

In a possible implementation, the method further includes: The first device sends the position information of the terminal device to the second device, in other words, the first device sends the first length and/or the second length to the second device.

In a possible implementation, the delay duration is determined based on third time and fourth time. The third time is time at which the third device receives the first signal. The fourth time is time at which the third device sends the second signal. After the third device receives the first signal, time at which the second time is sent may be determined by the third device. Higher flexibility is achieved and different requirements on positioning precision can be met. The first device may determine the delay duration based on the third time and the fourth time.

In a possible implementation, the third signal includes second time information. The second time information includes a time difference (that is, the delay duration) between the third time and the fourth time, or the second time information includes the third time and the fourth time. In this solution, the delay duration may be notified to the first device by using the third signal, so that the third device does not need to additionally send signaling that indicates the delay duration, to reduce signaling overheads as much as possible.

In a possible implementation, the delay duration is preset duration. The preset duration may be predefined, or may be preconfigured, or the preset duration may be agreed on between devices.

In a possible implementation, the delay duration is greater than or equal to a first preset threshold, so that the first device can distinguish between the first signal and the second signal as much as possible, to improve positioning precision.

In a possible implementation, the delay duration is a transmission delay between the first network device and the second network device. The transmission delay may be determined based on a second transmission line between the first network device and the second network device; or the transmission delay may be determined based on a second transmission line between the first network device and the second network device and delay duration provided by a delayer located on the second transmission line. This solution provides an implementation solution of the delay duration, to be specific, the delay duration is implemented by using a delay of the transmission line between the first network device and the second network device. For example, a length of the second transmission line is also greater than a length of the first transmission line, to delay signal transmission. For another example, the delayer may be disposed on the transmission line between the first network device and the second network device. In this way, the transmission line between the first network device and the second network device can be reduced.

In a possible implementation, the method further includes: The first device sends a third signal to the second device. The third signal includes the second time information and/or the first length. The second time information includes the first time and fifth time, and the fifth time is time at which the first device sends the third signal. According to this solution, the second device may determine a vertical distance from the terminal device to the first transmission line, in other words, the terminal device can be more accurately positioned.

In a possible implementation, the method further includes: The first device receives third time information sent by the second device. The third time information is determined based on the second time information, sixth time, and seventh time. The sixth time is time at which the second device receives the third signal, and the seventh time is time at which the second device sends the first signal. It may be understood that, if the third signal sent by the first device to the second device does not include the first length, the second device cannot determine the vertical distance from the terminal device to the first transmission line. In this case, the second device may send the third time information to the first device, so that the first device determines the vertical distance from the terminal device to the first transmission line based on the third time information, to implement positioning of the terminal device.

In a possible implementation, the method further includes: The first device determines the vertical distance from the terminal device to the first transmission line based on the third time information, the first length, and a first angle. The first angle is an angle between the first straight line and a main path of wireless signal transmission from the first transmission line to the terminal device. It may be understood that, in addition to the first length and/or the second length, the position information of the terminal device may further include the vertical distance.

In a possible implementation, the method further includes: The first device receives the vertical distance that is from the terminal device to the first transmission line and that is sent by the second device. After determining the vertical distance from the terminal device to the first transmission line, the second device may notify the first device of the vertical distance from the terminal device to the first transmission line, so that the first device does not need to determine the vertical distance from the terminal device to the first transmission line.

According to a second aspect, an embodiment of this application provides a positioning method. The method may be performed by a second communication apparatus. The second communication apparatus may be a communication device or a communication apparatus, for example, a chip system, that can support the communication device in implementing functions needed by the method. An example in which the communication device is a second device is used below for description. For example, the second communication apparatus is a second device, a chip disposed in the second device, or another component configured to implement a function of the second device. The method includes the following steps.

The second device sends a first signal, receives a third signal sent by a first device, and determines a vertical distance from a terminal device to a first transmission line between a first network device and a second network device based on second time information, a first length, sixth time, seventh time, and a first angle. The third signal includes the first length and/or the second time information, and the second time information is determined based on first time and fifth time. The first time is time at which the first device receives the first signal, and the fifth time is time at which the first device sends the third signal. The sixth time is time at which the second device receives the third signal, and the seventh time is time at which the second device sends the first signal. The first length is a distance from an intersection point of a first straight line on which the terminal device is located and the first transmission line to the second network device, and the first straight line is perpendicular to the first transmission line. The first angle is an angle between the first straight line and a main path of wireless signal transmission from the first transmission line to the terminal device. The terminal device is one of the first device and the second device, and the first network device is the other one of the first device and the second device.

In a possible implementation, the method further includes: The second device sends third time information to the first device. The third time information is determined based on the second time information, the sixth time, and the seventh time.

In a possible implementation, the method further includes: The second device determines the vertical distance from the terminal device to the first transmission line based on the third time information, the first length, and the first angle.

In a possible implementation, the method further includes: The second device sends the vertical distance from the terminal device to the first transmission line to the first device.

In a possible implementation, that the second device determines the vertical distance from the terminal device to the first transmission line between the first network device and the second network device based on the second time information, the first length, the sixth time, the seventh time, and the first angle includes: The second device determines the vertical distance according to a second formula, where the second formula satisfies:

$(t7-t1)-(t5-t2)=2\times[(d1-h\times\tan(\theta))/c1+(h/\cos(\theta))/c2]$, where t7 is the sixth time, t5 is the fifth time, t2 is the first time, t1 is the seventh time, d1 is a difference between the first transmission line and the first length, c1 is a transmission speed of an electromagnetic wave on the first transmission line, c2 is a transmission rate of an electromagnetic wave in the air, $\theta$ is the first angle, and h is the vertical distance.

According to a third aspect, an embodiment of this application provides a positioning method. The method may be performed by a third communication apparatus. The third communication apparatus may be a communication device or a communication apparatus, for example, a chip system, that can support the communication device in implementing functions needed by the method. An example in which the communication device is a third device is used below for description. For example, the third communication apparatus is a third device, a chip disposed in the third device, or another component configured to implement a function of the third device. The method includes the following steps.

The third device receives a first signal sent by a first device, and sends a second signal to a second device. There is delay duration between sending time of the second signal and a receiving time of the first signal. The delay duration is used to determine a distance from an intersection point of a first straight line on which a terminal device is located and a first transmission line to a second network device. The first transmission line is a transmission line between a first network device and the second network device, and the first straight line is perpendicular to the first transmission line. The terminal device is one of the first device and the second device, and the first network device is the other one of the first device and the second device. The third device is the second network device.

In a possible implementation, after receiving the first signal, the third device sends the second signal after the delay duration elapses.

In a possible implementation, the delay duration is a transmission delay between the first network device and the second network device. The transmission delay is determined based on a second transmission line between the first network device and the second network device, or the transmission delay is determined based on a length of a second transmission line and delay duration provided by a delayer located on the second transmission line.

In a possible implementation, the delay duration is preset duration.

In a possible implementation, the delay duration is greater than or equal to a first preset threshold.

According to a fourth aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the first device in the first aspect, or the communication apparatus may be an apparatus, for example, a chip or a chip system, that can implement the method provided in the first aspect.

In a possible design, the communication apparatus includes a corresponding means (means) or module configured to perform the method according to the first aspect. For example, the communication apparatus includes a processing unit (also referred to as a processing module or a processor sometimes) and/or a transceiver unit (also referred to as a transceiver module or a transceiver sometimes). These units (modules) may perform corresponding functions in the method example in the first aspect.

For example, the transceiver module may be configured to: receive a first signal by a second device, and receive a second signal sent by a third device. The processing module is configured to determine a first length based on first time, second time, and delay duration. The first time is time at which the communication apparatus receives the first signal. The second time is time at which the communication apparatus receives the second signal. The first length is a distance from an intersection point of a first straight line on which a terminal device is located and a first transmission line between a first network device and a second network device to the second network device, and the first straight line is perpendicular to the first transmission line. The terminal device is one of the communication apparatus and the second device, and the first network device is the other one of the communication apparatus and the second device. The third device is the second network device. For details, refer to detailed descriptions in the method example. Details are not described herein again.

According to a fifth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the second device in the second aspect, or the communication apparatus may be an apparatus, for example, a chip or a chip system, that can implement the method provided in the second aspect.

In a possible design, the communication apparatus includes a corresponding means (means) or module configured to perform the method according to the second aspect. For example, the communication apparatus includes a processing unit (also referred to as a processing module or a processor sometimes) and/or a transceiver unit (also referred to as a transceiver module or a transceiver sometimes). These units (modules) may perform corresponding functions in the method example in the second aspect.

For example, the transceiver module is configured to: send a first signal and receive a third signal sent by a first device. The third signal includes a first length and/or second time information. The second time information is determined based on first time and fifth time. The first time is time at which the first device receives the first signal. The fifth time is time at which the first device sends the third signal. The processing module is configured to determine a vertical distance from a terminal device to a first transmission line between a first network device and a second network device based on the second time information, the first length, sixth time, seventh time, and a first angle. The sixth time is time at which the communication apparatus receives the third signal. The seventh time is time at which the communication apparatus sends the first signal. The first length is a distance from an intersection point of a first straight line on which the terminal device is located and the first transmission line to the second network device, and the first straight line is perpendicular to the first transmission line. The first angle is an angle between the first straight line and a main path of wireless signal transmission from the first transmission line to the terminal device. The terminal device is one of the first device and the communication apparatus. The first network device is the other one of the first device and the communication apparatus. For details, refer to detailed descriptions in the method examples. Details are not described herein again.

According to a sixth aspect, an embodiment of this application provides a communication apparatus. The communication apparatus has a function of implementing behavior in the method embodiment of the third aspect. For beneficial effects, refer to the descriptions of the third aspect. Details are not described herein again. The communication apparatus may be the first device in the third aspect, or the communication apparatus may be an apparatus, for example, a chip or a chip system, that can implement the method provided in the third aspect.

In a possible design, the communication apparatus includes a corresponding means (means) or module configured to perform the method according to the third aspect. For example, the communication apparatus includes a processing unit (also referred to as a processing module or a processor sometimes) and/or a transceiver unit (also referred to as a transceiver module or a transceiver sometimes). These units (modules) may perform corresponding functions in the method example in the third aspect.

For example, the transceiver module is configured to receive a first signal sent by a first device, and the processing module is configured to determine a second signal. The transceiver module is further configured to send the second signal to a second device. There is delay duration between sending time of the second signal and time at which the transceiver module receives the first signal, and the delay duration is used to determine a distance from an intersection point of a first straight line on which a terminal device is located and a first transmission line to a second network device. The first transmission line is a transmission line between a first network device and the second network device, and the first straight line is perpendicular to the first transmission line. The terminal device is one of the first device and the second device, and the first network device is the other one of the first device and the second device. The third device is the second network device. For details, refer to detailed descriptions in the method example. Details are not described herein again.

According to a seventh aspect, an embodiment of this application provides a communication apparatus. The communication apparatus may be the communication apparatus in any one of the fourth aspect to the sixth aspect in the foregoing embodiments, or may be a chip or a chip system disposed in the communication apparatus in any one of the fourth aspect to the sixth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first device, the second device, or the third device in the foregoing method embodiment.

The communication interface in the communication apparatus in the seventh aspect may be a transceiver in the communication apparatus, and is implemented, for example, by using an antenna, a feeder, and a codec in the communication apparatus. Alternatively, if the communication apparatus is a chip disposed in a communication apparatus, the communication interface may be an input/output interface of the chip, for example, an input/output pin.

According to an eighth aspect, an embodiment of this application provides a communication apparatus. The communication apparatus includes an input/output interface and a logic circuit. The input/output interface is configured to input and/or output information. The logic circuit is configured to perform the method according to any one of the first aspect to the third aspect.

According to a ninth aspect, an embodiment of this application provides a chip system. The chip system includes a processor and may further include a memory and/or a communication interface, and is configured to implement the method according to any one of the first aspect to the third aspect. In a possible implementation, the chip system further includes a memory, configured to store a computer program. The chip system may include a chip, or may include a chip and another discrete component.

According to a tenth aspect, an embodiment of this application provides a communication system. The communication system includes a first device, a second device, and a third device. The first device is configured to perform the method performed by the first device in the first aspect, the second device is configured to perform the method performed by the second device in the second aspect, and the third device is configured to perform the method performed by the third device in the third aspect. Alternatively, the communication system may further include more first devices and/or more second devices, or more third devices.

According to an eleventh aspect, this application provides a computer-readable storage medium. The computer-readable storage medium stores a computer program; and when the computer program is run, the method according to any one of the first aspect to the third aspect is implemented.

According to a twelfth aspect, a computer program product is provided. The computer program product includes computer program code. When the computer program code is run, the method according to any one of the first aspect to the third aspect is performed.

For beneficial effects of the fourth aspect to the twelfth aspect and the implementations thereof, refer to the descriptions of the beneficial effects of the methods according to the first aspect to the third aspect and the implementations thereof.

## BRIEF DESCRIPTION OF DRAWINGS

FIG. 1 is a diagram of a principle of two-station-based TDOA positioning;
FIG. 2 is a diagram of a principle of three-station--based TDOA positioning;
FIG. 3 is a diagram of a positioning scenario to which an embodiment of this application is further applicable;
FIG. 4 is a schematic flowchart of a positioning method according to an embodiment of this application;
FIG. 5 is a diagram of signal transmission between a first network device and a second network device according to an embodiment of this application;
FIG. 6 is another diagram of signal transmission between a first network device and a second network device according to an embodiment of this application;
FIG. 7 is a schematic flowchart of a first positioning method according to an embodiment of this application;
FIG. 8 is a schematic flowchart of a second positioning method according to an embodiment of this application;
FIG. 9 is a schematic flowchart of a third positioning method according to an embodiment of this application;
FIG. 10 is a schematic flowchart of a fourth positioning method according to an embodiment of this application;
FIG. 11 is a diagram of a structure of a communication apparatus according to an embodiment of this application; and
FIG. 12 is another diagram of a structure of a communication apparatus according to an embodiment of this application.

## DESCRIPTION OF EMBODIMENTS

Embodiments of this application mainly provide a positioning method. To better understand the solutions provided in embodiments of this application, related content of the positioning method is first described.

The latest 3GPP standard supports a plurality of positioning technologies, including a TDOA-based positioning technology. A TDOA is a transmission time difference between signals sent by a terminal to two network devices, and may be used for terminal positioning. Based on different measurement objects, a downlink time difference of arrival (DL-TDOA) and an uplink time difference of arrival (UL-TDOA) are used. In some embodiments, the DL-TDOA may also be referred to as a UTDOA, and the UL-TDOA may also be referred to as an observed time difference of arrival (observed time difference of arrival, OTDOA).

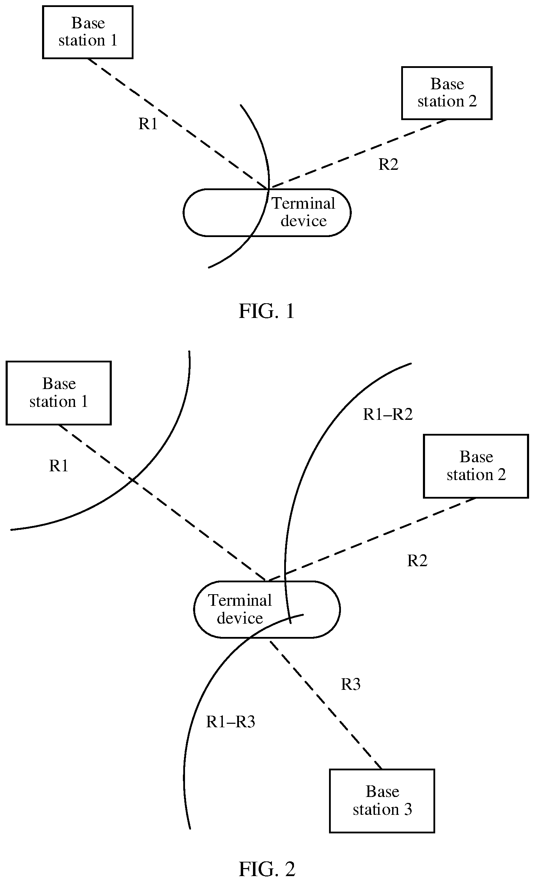

TDOA positioning is to determine a position of a terminal device by measuring transmission delay differences between the terminal device and a plurality of base stations. For example, FIG. 1 is a diagram of TDOA-based positioning. FIG. 1 uses an example in which a plurality of base stations are two base stations. As shown in FIG. 1, a distance difference R21=R2-R1 between a distance R1 between a terminal device and a base station 1 and a distance R2 between the terminal device and a base station 2 may be calculated based on a time difference of arrival between the terminal device and the base station 1 and the base station 2. It may be understood that, if a distance difference between the terminal device and the two base stations is known, the terminal device is located on a hyperbolic line that uses the two base stations as focuses and whose distance difference between the terminal device and the two focuses is a constant value. The example in FIG. 1 is still used. The terminal device is located on a hyperbolic line that uses the base station 1 and the base station 2 as focuses and whose distance difference between the terminal device and the two focuses is always R21. It can be learned that a specific position of the terminal device cannot be determined through the TDOA-based positioning based on the two base stations.

FIG. 2 is another diagram of TDOA-based positioning. A difference between FIG. 2 and FIG. 1 lies in that FIG. 2 uses an example in which a plurality of base stations are three base stations. As shown in FIG. 2, a distance difference R21=R2-R1 between a distance R1 between a terminal device and a base station 1 and a distance R2 between the terminal device and a base station 2 may be calculated based on a time difference of arrival between the terminal device and the base station 1 and the base station 2. Similarly, a distance difference R31=R3-R1 between the distance R1 between the terminal device and the base station 1 and a distance R3 between the terminal device and a base station 3 may be calculated based on a time difference of arrival between the terminal device and the base station 1 and the base station 3. In this case, the terminal device is located on a hyperbolic line 1 that uses the base station 1 and the base station 2 as focuses and whose distance difference between the terminal device and the two focuses is always R21, and is also located on a hyperbolic line 2 that uses the base station 1 and the base station 3 as focuses and whose distance difference between the terminal device and the two focuses is always R31. In other words, the terminal device is located at an intersection point of the hyperbolic line 1 and the hyperbolic line 2. It can be learned that determining a specific position of the terminal device based on the TDOA requires participation of at least three base stations. If there are less than three base stations in an environment, positioning of the terminal device cannot be implemented based on the TDOA.

In view of this, the solutions in embodiments of this application are provided. According to the solutions provided in embodiments of this application, the specific position of the terminal device can be determined based on two stations. Even in a scenario in which a base station is limited, for example, a scenario such as a subway or a tunnel, positioning of the terminal device can be implemented.

The technical solutions provided in embodiments of this application may be applied to various communication systems, for example, a long term evolution (long term evolution, LTE) system, a 5th generation mobile communication technology (5th generation mobile communication technology, 5G) system, namely, a new radio (new radio, NR) system, or a next generation communication system, such as a 6G system. Certainly, the technical solutions in embodiments of this application may also be applied to another communication system, provided that the communication system has a positioning requirement for a terminal. For example, the technical solutions provided in embodiments of this application may also be applied to an internet of things (internet of things, IoT) system, a narrowband internet of things (narrowband internet of things, NB-IoT) system, or the like, for example, wireless fidelity (wireless fidelity, Wi-Fi)-based IoT or a wearable Wi-Fi network. The wearable Wi-Fi network may be a Wi-Fi network formed by using a terminal device (for example, a mobile phone) as a virtual access point and an associated wearable device. In addition, in the solutions provided in embodiments of this application, the communication system is further applicable to a future-oriented communication technology. Systems described in embodiments of this application are intended to describe the technical solutions in embodiments of this application more clearly, and do not constitute a limitation on the technical solutions provided in embodiments of this application. A person of ordinary skill in the art may learn that, with evolution of network architectures, the technical solutions provided in embodiments of this application are also applicable to a similar technical problem.

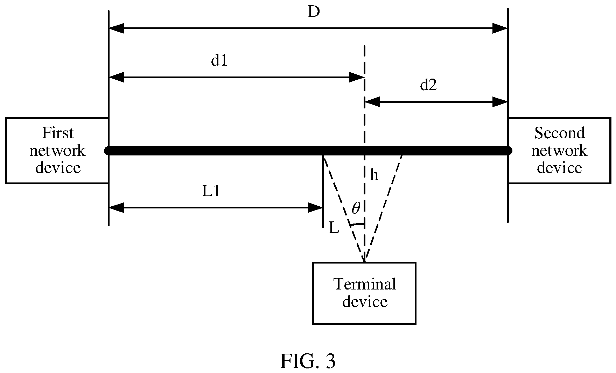

For example, FIG. 3 is a diagram of an architecture of a communication system to which an embodiment of this application is applicable. The communication system may include two network devices and one terminal device. The terminal device may be connected to the network devices. Certainly, a quantity of terminal devices in FIG. 3 is merely an example. There may further be fewer or more terminal devices. There may also be more network devices in FIG. 3.

In embodiments of this application, the terminal device is a device with a wireless transceiver function, and may send a signal to the network device, or receive a signal from the network device. The terminal device may include user equipment (user equipment, UE), and is also referred to as a terminal, an access station, a UE station, a remote station, a wireless communication device, a user apparatus, or the like sometimes. The terminal device is configured to connect a person, an object, a machine, and the like, may be widely used in various scenarios, and includes, for example, but not limited to terminal devices in the following scenarios: cellular communication, D2D, V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), telemedicine (telemedicine), a smart grid (smart grid), smart furniture, smart office, smart wearable, smart transportation, a smart city (smart city), an uncrewed aerial vehicle, and a robot. For example, the terminal device may be a mobile phone (mobile phone), a tablet computer (tablet computer), a computer with a wireless transceiver function, a VR terminal, an AR terminal, a wireless terminal in industrial control, a wireless terminal in self-driving, a smart speaker in an IoT network, a wireless terminal device in telemedicine, a wireless terminal device in a smart grid, a wireless terminal device in transportation security, a wireless terminal device in a smart city, or a wireless terminal device in a smart home.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement a method in this application.

In embodiments of this application, a communication apparatus configured to implement a function of the terminal device may be a network device, or may be an apparatus, for example, a chip system, that can support the terminal device in implementing the function. The apparatus may be installed in the terminal device. In the technical solutions provided in embodiments of this application, an example in which the apparatus configured to implement the function of the terminal device is a terminal device is used to describe the technical solutions provided in embodiments of this application.

In embodiments of this application, the network device may be an access device through which a terminal device accesses a mobile communication system in a wireless manner, and includes, for example, an access network (access network, AN) device, for example, a base station. Alternatively, the network device may be a device that communicates with the terminal device over an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (Public Land Mobile Network, PLMN) device, a device in a device-to-device (device-to-device, D2D) network, a device in a machine-to-machine (machine-to-machine, M2M) network, a device in an internet of things (internet of things, IoT) network, a network device in a PLMN network, or the like. A specific technology and a specific device form that are used by the network device are not limited in embodiments of this application.

In addition, a base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be other division of protocol layers. A radio frequency apparatus may be remotely disposed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control plane CU entity (CU-CP entity) and a user plane CU entity (CU-UP entity). In this network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used to describe the technical solutions provided in embodiments of this application.

The terms "system" and "network" may be used interchangeably in embodiments of this application. In embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects. For example, the first device and the second device are only used to distinguish between different devices, but are not used to limit functions, priorities, or importance degrees of two devices. In embodiments of this application, "if" and "if" may be exchanged, and unless otherwise specified, "when" and "in a case in which" may be exchanged.

The following describes the solutions provided in embodiments of this application. Before the solutions provided in embodiments of this application are described, some concepts in the following are uniformly described.

The following uses an example in which positioning of a terminal device is implemented via a first network device and a second network device. The first network device and the second network device may be base stations. The first network device and the second network device are connected by using a first transmission line or a second transmission line. The first transmission line may be a leaky coaxial cable. The second transmission line may also be a leaky coaxial cable. The leaky coaxial cable is also referred to as a leaky cable or a leaky cable, and includes an inner conductor, an insulation medium, and an outer conductor. The outer conductor is provided with a groove, and when an electromagnetic wave is propagated in the leaky cable, the electromagnetic wave is propagated outward through the groove on the outer conductor. Because the leaky coaxial cable has a characteristic of propagation outward, the leaky coaxial cable may provide wireless coverage similar to a base station. The terminal device located around the leaky coaxial cable may communicate with the first network device and the second network device based on the wireless coverage of the leaky coaxial cable. From this perspective, the first network device and/or the second network device only need/needs to be a transceiver or a wireless transceiver station that has a transceiver function, for example, a base station, a Wi-Fi device, a tag, an ultra-bandwidth (ultra-wideband, UWB) tag, or a long range radio (long range radio, LORA) module (terminal or device).

FIG. 3 is a diagram of a scenario to which an embodiment of this application is applicable. In FIG. 3, a first network device and a second network device are connected by using a first transmission line, and a length of the first transmission line is D. It may be understood that a distance (for example, d1 in FIG. 3) from an intersection point of a straight line (for example, a first straight line) on which a terminal device is located and the first transmission line to the first network device is determined, or a distance (for example, d2 in FIG. 3) from an intersection point of the straight line (for example, the first straight line) on which the terminal device is located and the first transmission line to the second network device is determined, in other words, the terminal device is located on the first straight line, so that positioning of the terminal device is implemented. In addition, if a vertical distance from the terminal device to the first transmission line is determined, a position of the terminal device on the first straight line may be further determined. For ease of description, in this specification, the straight line on which the terminal device is located is referred to as one-dimensional position information of the terminal device, and the position of the terminal device on the straight line is referred to as two-dimensional position information of the terminal device. In other words, in this specification, the one-dimensional position information of the terminal device indicates the first straight line on which the terminal device is located, and the two-dimensional position information of the terminal device indicates the position of the terminal device on the first straight line.

It can be seen from FIG. 3 that, to determine the position of the terminal device, d1, d2, or even h needs to be calculated. In other words, position information of the terminal device may include the first length d2 and/or the second length d1. Alternatively, position information of the terminal device includes the first length d2 and/or the second length d1, and the vertical distance h. It should be noted that, if the terminal device (or the first network device) obtains the first length d2 through calculation, the position information output by the terminal device (or the first network device) may be the first length d2 and/or the second length d1. The calculation of d1, d2, h, or the like is based on a plurality of points of time, for example, first time, second time, third time, fourth time, fifth time, sixth time, and seventh time. In different examples, time used for calculating the position of the terminal device may be the same or may be different. In Example 1 and Example 2 below, the first time is t2, the second time is t5, the third time is t3, the fourth time is t4, the fifth time is t6, the sixth time is t7, and the seventh time is t1. In Example 3 and Example 4, the first time is t2, the second time is t3, the fifth time is t4, the sixth time is t5, and the seventh time is t1.

The following describes in detail the solutions provided in embodiments of this application with reference to the accompanying drawings. In the following description process, an example in which the method is applied to a scenario shown in FIG. 3 is used. In this embodiment of this application, positioning of the terminal device includes determining the one-dimensional position information of the terminal device, for example, determining the distance from the intersection point of the first straight line on which the terminal device is located and the first transmission line to the first network device or the second network device. It may be understood that the first straight line is perpendicular to the first transmission line. For ease of description, the distance from the intersection point of the first straight line on which the terminal device is located and the first transmission line to the second network device is referred to as the first length below, namely, d2. Certainly, the positioning of the terminal device also includes determining the two-dimensional position information of the terminal device, that is, further includes determining the vertical distance from the terminal device to the first transmission line.

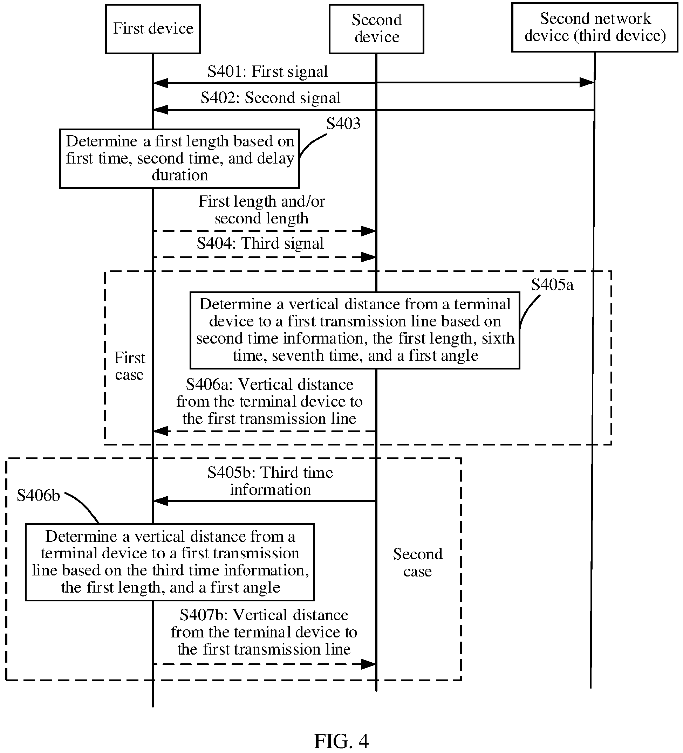

FIG. 4 is a schematic flowchart of a positioning method according to an embodiment of this application. A specific procedure of the positioning method includes the following steps. In the following, a terminal device is one of a first device and a second device, and a first network device is the other one of the first device and the second device. In other words, when the first device is the terminal device, the second device is the first network device; or when the second device is the terminal device, the first device is the first network device. A third device is a second network device.

S401: The second device sends a first signal, and correspondingly, the first device receives the first signal sent by the second device, and the third device also receives the first signal sent by the second device.

S402: The third device sends a second signal, and correspondingly, the first device receives the second signal sent by the third device.

The first device may determine a position of the terminal device by using a transmission time difference between a signal and the second device and the third device. For example, the second device may send the first signal, and the first device and the third device receive the first signal. After receiving the first signal, the third device may send the second signal after a period of time. It may also be understood as that, after receiving the first signal, the third device sends the second signal after specific duration (referred to as delay duration in this specification) elapses. In other words, the delay duration exists between time at which the third device sends the second signal and time at which the third device receives the first signal. The delay duration may be used to determine a first length. The first device may determine the first length based on time at which the first device receives the first signal, time at which the first device receives the second signal, and the delay duration. It should be noted that specific implementation forms of the first signal and the second signal are not limited in this embodiment of this application.

S403: The first device determines the first length based on first time, second time, and the delay duration.

The first time is the time at which the first device receives the first signal, and the second time is the time at which the first device receives the second signal. The delay duration is a time difference between the time at which the third device sends the second signal and the time at which the third device receives the first signal sent by the first device. For ease of description, the time at which the third device receives the first signal sent by the first device is referred to as third time, and the time at which the third device sends the second signal is referred to as fourth time.

It may be understood that the delay duration is short, and the first device may not be capable of distinguishing whether a received signal is from the second device or the third device. In other words, the delay duration is short, and the first device may consider that the received first signal is from the third device. Consequently, the first length cannot be accurately determined, or even the first length cannot be determined, in other words, the position of the terminal device cannot be determined. Therefore, in this embodiment of this application, the delay duration is greater than or equal to a first preset threshold. The first preset threshold may be predefined or preconfigured. Alternatively, the first preset threshold is determined based on a preset parameter, in other words, the first preset threshold is related to the preset parameter. The preset parameter may include a signal transmission bandwidth. For example, the first preset threshold may be greater than or equal to $1/(2 \times \text{Signal transmission bandwidth})$. The preset parameter may also include a length of a first transmission line, and the first preset threshold may be determined based on the length of the first transmission line.

A manner of implementing the delay duration by the third device (in other words, the second network device) is not limited in this embodiment of this application. The following describes possible implementations of the delay duration.

Implementation 1: The delay duration is a transmission delay between the first network device and the second network device. In other words, the time at which the second signal is sent is determined by the transmission delay between the first network device and the second network device.

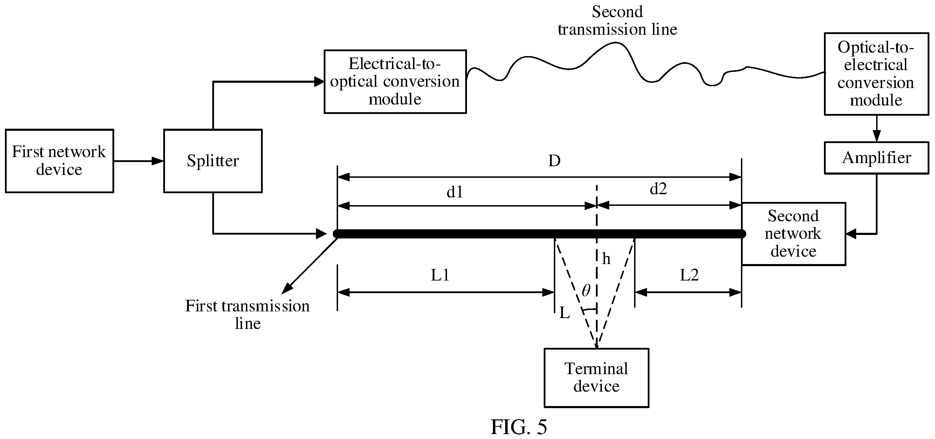

It may be understood that the delay duration is intended to enable a time difference to exist between points of time at which the first device receives signals respectively sent by the second device and the second network device. Therefore, in this case, it may also be considered that the first network device and the second network device have two transmission paths. For example, FIG. 5 is a diagram of signal transmission between a first network device and a second network device. One transmission path between the first network device and the second network device is a first transmission line between the first network device and the second network device, and the other transmission path is a second transmission line between the first network device and the second network device. The first network device may be separately connected to the first transmission path and the second transmission path by using splitters. A length of the second transmission line is different from a length of the first transmission line. Specifically, the length of the second transmission line depends on the length of the first transmission line and delay duration. In this case, the second network device receives a first signal sent by a second device, and the first signal arrives at a first device after a transmission delay of the second transmission line. In other words, the delay duration exists between time at which the first device receives a signal from the second network device and time at which the first device receives a signal from the second device. As shown in FIG. 5, a delay link may include an electrical-to-optical conversion module, the second transmission line, and an optical-to-electrical conversion module. In this case, the optical-to-electrical conversion module may be understood as the second network device. From this perspective, positioning of a terminal device can be implemented based on one network device (namely, the first network device).

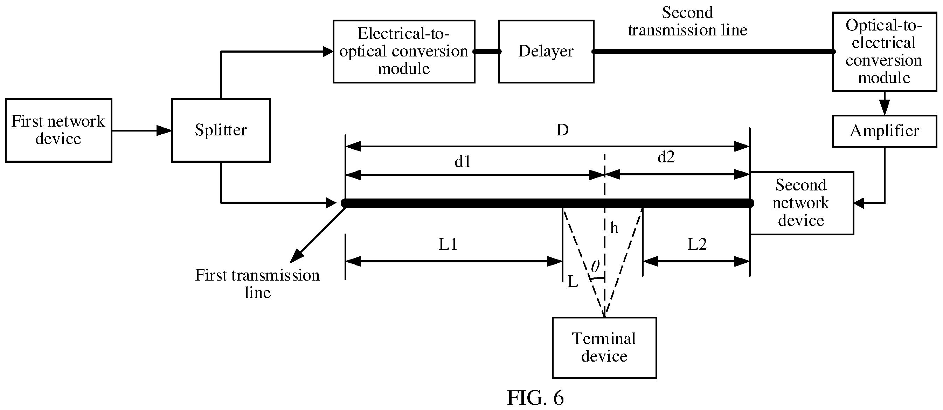

In an alternative implementation, the transmission delay between the first network device and the second network device is determined based on a length of the second transmission line and delay duration provided by a delayer located on the second transmission line. It may also be understood as that the delay duration may be implemented by using the delayer. The delayer is, for example, an optical delayer. A delay link may include an electrical-to-optical conversion module, an optical delay line, an optical fiber, an optical-to-electrical conversion module, an electrical amplifier, and the like, provided that a signal delay can be implemented. In this case, the length of the second transmission line may be the same as or different from a length of the first transmission line. For example, FIG. 6 is another diagram of signal transmission between a first network device and a second network device. FIG. 6 differs from FIG. 5 in that a delayer is disposed on a second transmission line. In this case, an optical-to-electrical conversion module may also be understood as a second network device, in other words, positioning of a terminal device can be implemented based on one network device.

Implementation 2: The second network device determines the delay duration. In other words, after receiving the first signal, the second network device sends the second signal after the delay duration elapses. The delay duration may be determined by the second network device, and flexibility is achieved. For example, the second device may determine the delay duration based on an actual requirement of positioning precision, and different positioning precision may correspond to different delay duration.

It may be understood that the first device needs to know the delay duration when calculating the first length. If the delay duration is implemented in the foregoing implementation 1, it may be considered that the delay duration is predefined or preconfigured, and the first device obtains the predefined or preconfigured delay duration. If the delay duration is implemented in the foregoing implementation 2, the second network device may notify the first device of the delay duration. For example, the second signal sent by the second network device may include first time information, and the first time information may be the delay duration, or the first time information may include third time and fourth time. Therefore, the first device may determine the delay duration based on the first time information.

For ease of understanding, the following describes in detail how the first device determines the first length based on the first time, the second time, and the delay duration with reference to a specific example.

Example 1: An example in which the first device is a terminal device and the second device is a first network device is used, and the terminal device calculates the first length. In this example, the delay duration is determined by the second network device.

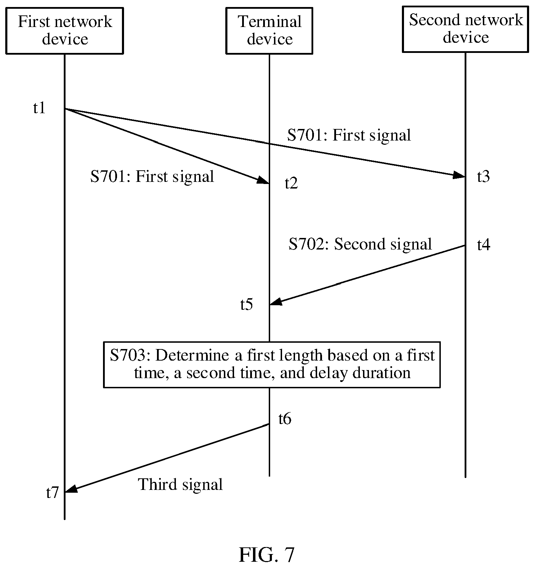

FIG. 7 is a schematic flowchart of a first positioning method according to an embodiment of this application. A positioning procedure includes the following steps.

S701: A first network device sends a first signal at t1 (in other words, seventh time).

The first network device sends the first signal at t1, and correspondingly, a terminal device receives the first signal at t2 (in other words, first time). A second network device receives the first signal at t3 (in other words, third time).

S702: The second network device sends a second signal at t4 (in other words, fourth time).

After receiving the first signal, the second network device sends the second signal at t4 after delay duration elapses. In other words, the delay duration is t4-t3. The second signal may include t3 and t4, or the second signal may include t4-t3. The terminal device receives the second signal at t5 (in other words, second time).

S703: The terminal device determines a first length based on the first time, the second time, and the delay duration.

Still refer to FIG. 3. It may be understood that t2 and t1 satisfy a formula (1), t3 and t1 satisfy a formula (2), and t5 and t4 satisfy a formula (3). $c_1$ is a transmission speed of an electromagnetic wave in a leaky coaxial cable, and $c_2$ is a transmission speed of an electromagnetic wave in the air.

$$(t2-t1)=(d1-h\times\tan(\theta))/c1+(h/\cos(\theta))/c2 \qquad (1)$$

(1)

$$(t3-t1)=(d1+d2)/c1 \qquad (2)$$

$$(t5-t4)=(d2-h\times\tan(\theta))/c1+(h/\cos(\theta))/c2 \tag{3}$$

$(t5-t4)=(d2-h\times\tan(\theta))/c1+(h/\cos(\theta))/c2$ (3)

According to the formula (1) to the formula (3), it may be obtained that (t5-t4)+(t3-t1)-(t2-t1)=(t5-t2)-(t4-t3) $=2\times d2/c1$, to obtain a formula (4).

$d2=[(t5-t2)-(T)]\times c1/2$ (4), where T is the delay duration, that is, T=t4-t3.

The terminal device may calculate d2, that is, the first length, according to the formula (4), to determine that the terminal device is located on a first straight line. In other words, a distance from an intersection point of the first straight line and a first transmission line to the second network device is d2. It may be understood that D is a known value. The terminal device may further determine, based on D and d2, a distance from the intersection point of the first straight line and the first transmission line to the first network device, that is, d1=D-d2.

Example 2: An example in which the first device is a first network device and the second device is a terminal device is used, and the first network device calculates the first length. In this example, the delay duration is determined by the second network device.

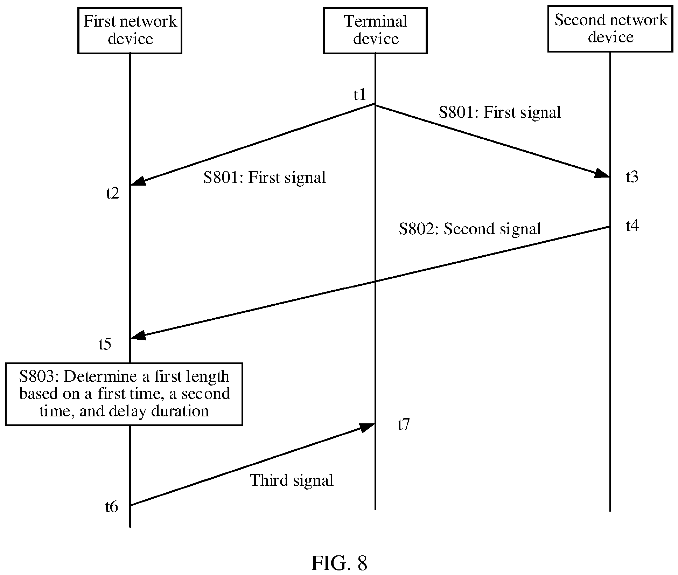

FIG. 8 is a schematic flowchart of a second positioning method according to an embodiment of this application. The positioning procedure includes the following steps.

S801: A terminal device sends a first signal at t1 (in other words, seventh time).

The terminal device sends the first signal at t1, and correspondingly, a first network device receives the first signal at t2 (in other words, first time). A second network device receives the first signal at t3 (in other words, third time).

S802: The second network device sends a second signal at t4 (in other words, fourth time).

After receiving the first signal, the second network device sends the second signal at t4 after delay duration elapses. In other words, the delay duration is t4-t3. The second signal may include t3 and t4, or the second signal may include t4-t3. The terminal device receives the second signal at t5 (in other words, second time).

S803: The first network device determines a first length based on the first time, the second time, and the delay duration.

Still refer to FIG. 3. It may be understood that t2 and t1 satisfy a formula (5), t3 and t1 satisfy a formula (6), and t5 and t4 satisfy a formula (7). c1 is a transmission speed of an electromagnetic wave in a leaky coaxial cable, and c2 is a transmission speed of an electromagnetic wave in the air.

$$(t2-t1)=(d1-h\times\tan(\theta))/c1+(h/\cos(\theta))/c2 \tag{5}$$

$$(t3-t1)=(d2-h\times\tan(\theta))/c1+(h/\cos(\theta))/c2 \tag{6}$$

$$(t5-t4)=(d1+d2)/c1 \tag{7}$$

According to the formula (5) to the formula (7), it may be obtained that (t5-t4)+(t3-t1)-(t2-t1)=(t5-t2)-(t4-t3) $=2\times d2/c1$, to obtain a formula (8).

$d2=[(t5-t2)-(T)]\times c1/2$ (8), where T is the delay duration, that is, T=t4-t3.

The first network device may calculate d2, that is, the first length, according to the formula (8), to determine that the terminal device is located on a first straight line. In other words, a distance from an intersection point of the first straight line and a first transmission line to the second network device is d2. It may be understood that D is a known value. The first network device may further determine, based on D and d2, a distance from the intersection point of the first straight line and the first transmission line to the first network device, that is, d1=D-d2.

Example 3: An example in which the first device is a terminal device and the second device is a first network device is used, and the terminal device calculates the first length. In this example, the delay duration is determined by a transmission delay between the first network device and the second network device. As shown in FIG. 5 or FIG. 6, in this case, the optical-to-electrical conversion module on the delay link may be understood as the second network device.

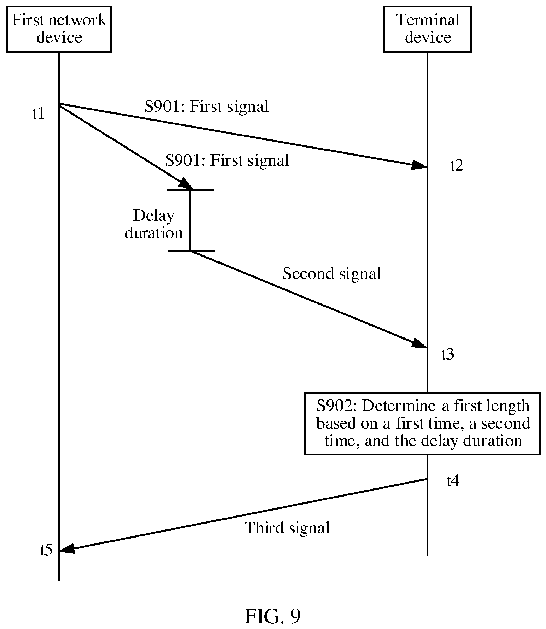

FIG. 9 is a schematic flowchart of a third positioning method according to an embodiment of this application. The positioning procedure includes the following steps.

S901: A first network device sends a first signal at t1 (in other words, seventh time).

It may be understood that the first signal passes through two transmission paths, for example, referred to as a first transmission path and a second transmission path. The first transmission path is a first transmission line between the first network device and a second network device, and the second transmission path is a second transmission line between the first network device and the second network device. The first transmission line may be a leaky coaxial cable, so that a terminal device located around the first network device may also receive the first signal. The first signal arrives at the terminal device through the first transmission path and the second transmission path. In addition, there is delay duration between time at which the first signal arrives at the terminal device through the first transmission path and time at which the first signal arrives at the terminal device through the second transmission path. In this embodiment of this application, the time at which the first signal arrives at the terminal device through the first transmission path is t2 (in other words, first time), and the time at which the first signal arrives at the terminal device through the second transmission path is t3.

S902: The terminal device determines a first length based on the first time, the second time, and the delay duration.

Still refer to FIG. 5 or FIG. 6. It may be understood that t2 and t1 satisfy a formula (9), and t3 and t1 satisfy a formula (10). c1 is a transmission speed of an electromagnetic wave in a leaky coaxial cable, c2 is a transmission speed of an electromagnetic wave in the air, c3 is a transmission speed of an electromagnetic wave on a delay link, and D2 is a length of the delay link, that is, a length of the second transmission line.

$$(t2–t1)=(d1–h\times\tan(\theta))/c1+(h/\cos(\theta))/c2 \tag{9}$$

$$(t3–t1)=\Delta t+D2/c3+(d2–h\times\tan(\theta))/c1+(h/\cos(\theta))/c2 \tag{10}$$

According to the formula (9) and the formula (10), it may be obtained that (t3-t1)-(t2-t1)=(t3-t2)=Δt+D2/c3+d2/c1-d1/c1, to obtain a formula (11).

$$d2–d1=[(t3–t2)–(\Delta t+D2/c3)]\times c1 \tag{11}$$

Because d1+d2=D, the terminal device may calculate d2, that is, the first length, according to the formula (11). The terminal device may also determine a distance d1 from an intersection point of a first straight line and the first transmission line to the first network device.

Example 4: An example in which the first device is a first network device and the second device is a terminal device is used, and the first network device calculates the first length. In this example, the delay duration is determined by a transmission delay between the first network device and the second network device. As shown in FIG. 5 or FIG. 6, in this case, the optical-to-electrical conversion module on the delay link may be understood as the second network device.

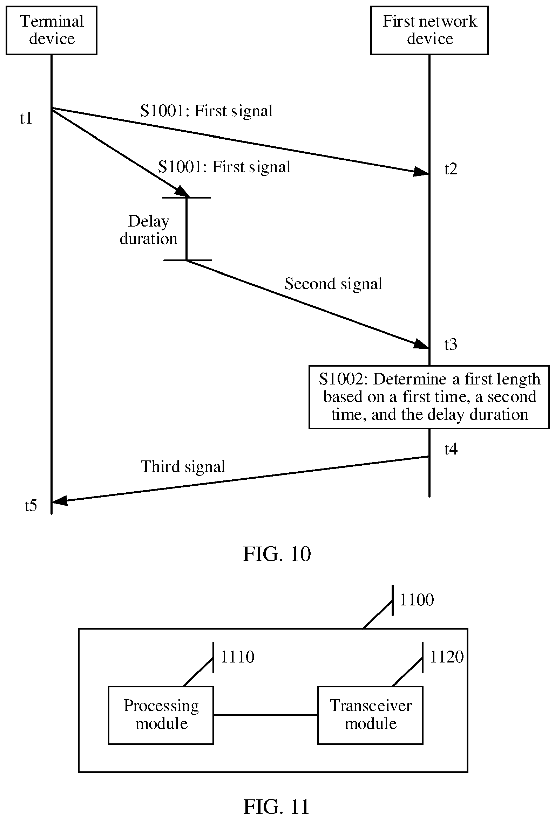

FIG. 10 is a schematic flowchart of a fourth positioning method according to an embodiment of this application. The positioning procedure includes the following steps.

S1001: A terminal device sends a first signal at t1 (in other words, seventh time).

It may be understood that the first signal passes through two transmission paths, for example, referred to as a first transmission path and a second transmission path. The first transmission path is a first transmission line between a first network device and a second network device, and the second transmission path is a second transmission line between the first network device and the second network device. The first transmission line may be a leaky coaxial cable, so that the terminal device located around the first network device may also receive the first signal. There is delay duration between time at which the first signal arrives at the first network device through the first transmission path and time at which the first signal arrives at the first network device through the second transmission path. In this embodiment of this application, the time at which the first signal arrives at the first network device through the first transmission path is t2 (in other words, first time), and the time at which the first signal arrives at the first network device through the second transmission path is t3.

S1002: The first network device determines a first length based on the first time, the second time, and the delay duration.

Still refer to FIG. 5 or FIG. 6. It may be understood that t2 and t1 satisfy a formula (12), and t3 and t1 satisfy a formula (13). c1 is a transmission speed of an electromagnetic wave in a leaky coaxial cable, c2 is a transmission speed of an electromagnetic wave in the air, c3 is a transmission speed of an electromagnetic wave on a delay link, and D2 is a length of the delay link, that is, a length of the second transmission line.

$$(t2–t1)=(d1–h\times\tan(\theta))/c1+(h/\cos(\theta))/c2 \tag{12}$$

$$(t3–t1)=\Delta t+D2/c3+(d2–h\times\tan(\theta))/c1+(h/\cos(\theta))/c2 \tag{13}$$

According to the formula (12) and the formula (13), it may be obtained that (t3-t1)-(t2-t1)=(t3-t2)=Δt+D2/c3+d2/c1-d1/c1, to obtain a formula (14).

$$d2–d1=[(t3–t2)–(\Delta t+D2/c3)]\times c1 \tag{14}$$

Because d1+d2=D, the first network device may calculate d2, that is, the first length, according to the formula (14). The first network device may also determine a distance d1 from an intersection point of a first straight line and the first transmission line to the first network device.

It can be learned from the example 1 to the example 4 that even if there is one network device or two network devices, the method provided in embodiments of this application can be used to obtain the one-dimensional position information of the terminal device, in other words, determine the first length or the second length. In a possible implementation, after determining the first length, the first device may send the first length as the position information of the terminal device to the second device. Alternatively, after determining the first length, the first device may determine the second length based on the length of the first transmission line and the first length. Then, the first device may send the second length as the position information of the terminal device to the second device, or the first device may send the first length and the second length to the second device. It should be noted that the first device may not send the first length and/or the second length to the second device. Therefore, in FIG. 4, the first length and/or the second length for interaction between the first device and the second device are/is shown by using a dashed line. Optionally, the first device or the second device further sends information about the first length and/or the second length to the second network device or another device.

Further, a vertical distance, namely, h, from the terminal device to the first transmission line may be further determined, that is, two-dimensional position information of the terminal device is determined. The vertical distance from the terminal device to the first transmission line may be determined by the first device, or may be determined by the second device. The following describes how to determine the vertical distance from the terminal device to the first transmission line.

In a first case, the second device determines the vertical distance from the terminal device to the first transmission line.

S404: The first device sends a third signal to the second device. Correspondingly, the second device receives the third signal.

The third signal may include second time information and/or the first length. The second time information may be determined based on the first time and fifth time, and the fifth time is time at which the first device sends the third signal. For example, the third signal includes d2, or the third signal includes d1. For the second device, even if the third signal includes d1, d2 may also be determined based on the third signal. For another example, the third signal includes the first time and the fifth time, or the third signal includes a time difference between the fifth time and the first time. For another example, the third signal includes the first length and the second time information. For example, the third signal includes d2, the first time, and the fifth time; or the third signal includes d1, the first time, and the fifth time; or the third signal includes d2 and the time difference between the fifth time and the first time, or the third signal includes d1 and the time difference between the fifth time and the first time.

S405a: The second device determines the vertical distance from the terminal device to the first transmission line based on the second time information, the first length, sixth time, seventh time, and a first angle.

The sixth time is time at which the second device receives the third signal, and the seventh time is time at which the second device sends the first signal. With reference to FIG. 3, FIG. 5, or FIG. 6, it can be learned that:

$$\text{(Sixth time–Seventh time)–(Fifth time–First time)}=2\times[(d1-h\times\tan(\theta))/c1+(h/\cos(\theta))/c2].$$

Because the sixth time, the seventh time, (the fifth time-the first time), d1, c1, $\theta$, and c2 are known values, h may be obtained through calculation according to the foregoing formula. It should be noted that $\theta$ is the first angle, that is, an angle between the first straight line and a main path of wireless signal transmission from the first transmission line to the terminal device. It may be understood that the main path of the wireless signal transmission is a path on which the terminal device receives maximum transmission line radiated power. $\theta$ is determined by a physical characteristic of a leaky coaxial cable, for example, $\theta$ may be determined by a frequency for signal transmission in the leaky coaxial cable, a distance between leaky holes in the leaky coaxial cable, and a shape of the leaky hole in the leaky coaxial cable.

FIG. 7 or FIG. 8 is used as an example. The sixth time is t7, the seventh time is t1, the fifth time is t6, and the first time is t2. In this case, a formula (15): (t7-t1)-(t6-t2)=2$\times$[(d1-h$\times$tan($\theta$))/c1+(h/cos($\theta$))/c2] is obtained, so that h may be obtained through calculation.

FIG. 9 or FIG. 10 is used as an example. The sixth time is t5, the seventh time is t1, the fifth time is t4, and the first time is t2. In this case, a formula (16): (t5-t1)-(t4-t2)=2$\times$[(d1-h$\times$tan($\theta$))/c1+(h/cos($\theta$))]/c2] is obtained, so that h may be obtained through calculation.

It may be understood that, when the third signal includes the second time information and the first length (d2), the second device may determine the vertical distance from the terminal device to the first transmission line.

S406a: The second device sends the vertical distance from the terminal device to the first transmission line to the first device.

After determining the vertical distance from the terminal device to the first transmission line, the second device may send the vertical distance to the first device, so that the first device does not need to determine the vertical distance from the terminal device to the first transmission line. It should be noted that S406a is not a mandatory step, in other words, an optional step. Therefore, S406a is shown by using a dashed line in FIG. 4.

In a second case, the first device determines the vertical distance from the terminal device to the first transmission line.

S405b: The second device sends third time information to the first device, and correspondingly, the first device receives the third time information sent by the second device. The third time information may be used to calculate a second length, and the second length is a length of a signal transmission path between the first device and the second device, that is, L1+L in FIG. 3. It should be noted that the signal transmission path between the first device and the second device herein may be a strongest transmission path in a plurality of signal transmission paths between the first device and the second device. Time indicated by the third time information is (t7-t1)-(t6-t2). The third time information may include (t7-t1)-(t6-t2), or the third time information may include t7, t1, and (t6-t2)

It may be understood that, it can be learned from the formula (15) or the formula (16) that if the third signal sent by the first device does not include the first length, the second device cannot determine the vertical distance from the terminal device to the first transmission line even when determining the second length. Therefore, if the third signal does not include the first length, after determining the third time information, the second device may notify the first device of the third time information, and the first device determines the vertical distance from the terminal device to the first transmission line.

S406b: The first device determines the vertical distance from the terminal device to the first transmission line based on the third time information, the first length, and a first angle. The first angle is an angle between the first straight line and a main path of wireless signal transmission from the first transmission line to the terminal device.

It may be understood that, $(t7-t1)-(t6-t2)=2\times[(d1-h\times\tan(\theta))/c1+(h/\cos(\theta))/c2]$. Therefore, the first device may determine the vertical distance from the terminal device to the first transmission line based on the third time information, the first length (or d2), and the first angle.

S407b: The first device sends the vertical distance from the terminal device to the first transmission line to the second device.

After determining the vertical distance from the terminal device to the first transmission line, the first device may send the vertical distance to the second device, so that the second device does not need to determine the vertical distance from the terminal device to the first transmission line. It should be noted that, S407b is not a mandatory step, in other words, an optional step. Therefore, S407b is shown by using a dashed line in FIG. 4.

In this embodiment of this application, even if there is one network device or two network devices, the one-dimensional position information of the terminal device can be obtained, and even the two-dimensional position information of the terminal device can be determined, and positioning can be performed in a wider scenario.

In embodiments provided in this application, the methods provided in embodiments of this application are described separately from a perspective of interaction between the terminal device, the first network device, and the second network device. To implement the functions in the foregoing method provided in embodiments of this application, the terminal device, the first network device, and the second network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Embodiments of this application further provide a communication apparatus. The following describes, with reference to the accompanying drawings, the communication apparatus configured to implement the foregoing methods in embodiments of this application.

FIG. 11 is a block diagram of a communication apparatus 1100 according to an embodiment of this application. The communication apparatus 1100 may include a processing module 1110 and a transceiver module 1120. Optionally, a storage unit may be further included. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing modules may be independently disposed, or may be partially or completely integrated.

In some possible implementations, the communication apparatus 1100 can correspondingly implement behavior and functions of the first device in the foregoing method embodiments. The communication apparatus 1100 may be the first device, may be a component (for example, a chip or a circuit) used in the first device, or may be a chip or a chip set in the first device, or a part of the chip configured to perform a related method function. For example, the communication apparatus 1100 may perform the steps performed by the first device in any one of FIG. 4 or FIG. 7 to FIG. 10.

For example, the transceiver module 1120 is configured to: receive a first signal sent by a second device, and receive a second signal sent by a third device. The processing module 1110 may determine a first length based on first time, second time, and delay duration. The first time is time at which the first device receives the first signal. The second time is time at which the first device receives the second signal. The first length is a distance from an intersection point of a first straight line on which a terminal device is located and a first transmission line between a first network device and a second network device to the second network device, and the first straight line is perpendicular to the first transmission line. The terminal device is one of the communication apparatus 1100 and the second device. The first network device is the other one of the communication apparatus 1100 and the second device. The third device is the second network device.

In an optional implementation, the delay duration is determined based on third time and fourth time. The third time is time at which the third device receives the first signal, and the fourth time is time at which the third device sends the second signal.

In an optional implementation, the delay duration is preset duration.

In an optional implementation, the delay duration is a transmission delay between the first network device and the second network device. The transmission delay is determined based on a length between the first network device and the second network device, or the transmission delay is determined based on a length of a second transmission line and delay duration provided by a delayer located on the second transmission line.

In an optional implementation, the second signal includes first time information. The first time information includes a time difference between the third time and the fourth time; or the first time information includes the third time and the fourth time.

In an optional implementation, the delay duration is greater than or equal to a first preset threshold.

In an optional implementation, position information of the terminal device includes the first length and/or a second length.

In an optional implementation, the transceiver module 1120 is further configured to send the position information of the terminal device to the second device. In other words, the transceiver module 1120 is further configured to send the first length and/or the second length to the second device.

In an optional implementation, the transceiver module 1120 is further configured to send a third signal to the second device. The third signal includes second time information and/or the first length. The second time information is determined based on the first time and fifth time, and the fifth time is time at which the communication apparatus 1100 sends the third signal.

In an optional implementation, the transceiver module 1120 is further configured to receive third time information sent by the second device. The third time information is determined based on the second time information, sixth time, and seventh time. The sixth time is time at which the second device receives the third signal, and the seventh time is time at which the second device sends the first signal.

In an optional implementation, the processing module 1110 is further configured to determine a vertical distance from the terminal device to the first transmission line based on the third time information, the first length, and a first angle. The first angle is an angle between the first straight line and a main path of wireless signal transmission from the first transmission line to the terminal device.

In an optional implementation, the transceiver module 1120 is further configured to receive a vertical distance that is from the terminal device to the first transmission line and that is sent by the second device.

In an optional implementation, the processing module 1110 is further configured to determine the first length according to a first formula, where the first formula satisfies: $d2=[(t5-t2)-T]\times c1/2$, where $d2$ is the first length, $t5$ is the second time, $t2$ is the first time, $T$ is the delay duration, and $c1$ is a transmission speed of an electromagnetic wave on the first transmission line.

In an optional implementation, the position information of the terminal device includes the first length and/or the second length, and the vertical distance.

For details, refer to related content in any embodiment in FIG. 4 to FIG. 10. Details are not described herein again.

In some other possible implementations, the communication apparatus 1100 can correspondingly implement behavior and functions of the second device in the foregoing method embodiments. The communication apparatus 1100 may be the second device, may be a component (for example, a chip or a circuit) used in the second device, or may be a chip or a chip set in the second device, or a part of the chip configured to perform a related method function. For example, the communication apparatus 1100 may perform the steps performed by the second device in any one of FIG. 4 or FIG. 7 to FIG. 10.

For example, the transceiver module 1120 is configured to: send a first signal and receive a third signal sent by a first device. The third signal includes a first length and/or second time information, and the second time information is determined based on first time and fifth time. The first time is time at which the first device receives the first signal, and the fifth time is time at which the first device sends the third signal. The processing module 1110 is configured to determine a vertical distance from a terminal device to a first transmission line between a first network device and a second network device based on the second time information, the first length, sixth time, seventh time, and a first angle. The sixth time is time at which the communication apparatus 1100 receives the third signal, and the seventh time is time at which the communication apparatus 1100 sends the first signal. The first length is a distance from an intersection point of a first straight line on which the terminal device is located and the first transmission line to the second network device, and the first straight line is perpendicular to the first transmission line. The first angle is an angle between the first straight line and a main path of wireless signal transmission from the first transmission line to the terminal device. The terminal device is one of the first device and the communication apparatus 1100, and the first network device is the other one of the first device and the communication apparatus 1100.

In an optional implementation, the transceiver module 1120 is further configured to send third time information to the first device. The third time information is determined based on the second time information, the sixth time, and the seventh time.

In an optional implementation, the processing module 1110 is further configured to determine the vertical distance from the terminal device to the first transmission line based on the third time information, the first length, and the first angle.

In an optional implementation, the transceiver module 1120 is further configured to send the vertical distance from the terminal device to the first transmission line to the first device.

In an optional implementation, the processing module 1110 is specifically configured to determine the vertical distance according to a second formula, where the second formula satisfies: $(t7-t1)-(t5-t2)=2\times[(d1-h\times\tan(\theta))/c1+(h/\cos(\theta))/c2]$, where t7 is the sixth time, t5 is the fifth time, t2 is the first time, t1 is the seventh time, d1 is a difference between the first transmission line and the first length, c1 is a transmission speed of an electromagnetic wave on the first transmission line, c2 is a transmission rate of an electromagnetic wave in the air, $\theta$ is the first angle, and h is the vertical distance.

For details, refer to related content in any embodiment in FIG. 4 or FIG. 7 to FIG. 10. Details are not described herein again.

In some other possible implementations, the communication apparatus 1100 can correspondingly implement behavior and functions of the third device in the foregoing method embodiments. The communication apparatus 1100 may be the third device, may be a component (for example, a chip or a circuit) used in the third device, or may be a chip or a chip set in the third device, or a part of the chip configured to perform a related method function. For example, the communication apparatus 1100 may perform the steps performed by the third device in any one of FIG. 4 or FIG. 7 to FIG. 10.

For example, the transceiver module 1120 is configured to: receive a first signal sent by a first device, and send a second signal to a second device. There is delay duration between sending time of the second signal and time at which the transceiver module 1120 receives the first signal. The delay duration may be used to determine a distance from an intersection point of a first straight line on which a terminal device is located and a first transmission line to a second network device. The first transmission line is a transmission line between a first network device and the second network device, and the first straight line is perpendicular to the first transmission line. The terminal device is one of the first device and the second device, and the first network device is the other one of the first device and the second device. The third device is the second network device.

In an optional implementation, after receiving the first signal, the transceiver module 1120 sends the second signal after the delay duration elapses.

In an optional implementation, the delay duration is a transmission delay between the first network device and the second network device. The transmission delay is determined based on a length of a second transmission line between the first network device and the second network device, or the transmission delay is determined based on a length of a second transmission line and delay duration provided by a delayer located on the second transmission line.

In an optional implementation, the delay duration is preset duration.

In an optional implementation, the delay duration is greater than or equal to a first preset threshold.

It should be understood that the processing module 1110 in this embodiment of this application may be implemented by a processor or a processor-related circuit component, and the transceiver module 1120 may be implemented by a transceiver, a transceiver-related circuit component, or a communication interface.

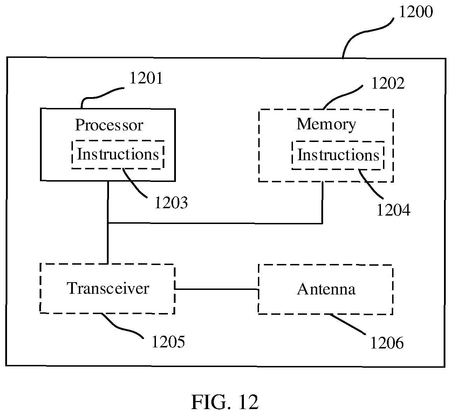

FIG. 12 is a block diagram of a communication apparatus 1200 according to an embodiment of this application. The communication apparatus 1200 may be a first device, and can implement functions of the first device in the method provided in embodiments of this application. Alternatively, the communication apparatus 1200 may be an apparatus that can support the first device in implementing corresponding functions in the methods provided in embodiments of this application. The communication apparatus 1200 may be a chip system. In this embodiment of this application, the chip system may include a chip, or may include a chip and another discrete component. For specific functions, refer to descriptions of the foregoing method embodiments. The communication apparatus 1200 may be a second device, and can implement functions of the second device in the method provided in embodiments of this application. Alternatively, the communication apparatus 1200 may be an apparatus that can support the second device in implementing corresponding functions in the methods provided in embodiments of this application. The communication apparatus 1200 may be a chip system. In this embodiment of this application, the chip system may include a chip, or may include a chip and another discrete component. For specific functions, refer to descriptions of the foregoing method embodiments. The communication apparatus 1200 may be a third device, and can implement functions of the third device in the method provided in embodiments of this application. Alternatively, the communication apparatus 1200 may be an apparatus that can support the third device in implementing corresponding functions in the methods provided in embodiments of this application. The communication apparatus 1200 may be a chip system. In this embodiment of this application, the chip system may include a chip, or may include a chip and another discrete component. For specific functions, refer to descriptions of the foregoing method embodiments.

The communication apparatus 1200 includes one or more processors 1201 that may be configured to implement or support the communication apparatus 1200 in implementing the functions of the first device in the methods provided in embodiments of this application. For details, refer to detailed descriptions in the method examples. Details are not described herein again. The one or more processors 1201 may alternatively be configured to implement or support the communication apparatus 1200 in implementing the functions of the second device in the methods provided in embodiments of this application. For details, refer to detailed descriptions in the method examples. Details are not described herein again. The one or more processors 1201 may alternatively be configured to implement or support the communication apparatus 1200 in implementing the functions of the third device in the methods provided in embodiments of this application. For details, refer to detailed descriptions in the method examples. Details are not described herein again.

The processor 1201 may also be referred to as a processing unit or a processing module, and may implement a specific control function. The processor 1201 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1200, execute a software program, and/or process data. Different processors may be independent devices, or may be integrated into one or more processors, for example, integrated into one or more application-specific integrated circuits.

Optionally, the communication apparatus 1200 includes one or more memories 1202, configured to store instructions 1204. The instructions may be run on the processor 1201, to enable the communication apparatus 1200 to perform the method described in the foregoing method embodiments. The memory 1202 and the processor 1201 may be separately disposed, or may be integrated together, or it may be considered that the memory 1202 is coupled to the processor 1201. The coupling in this embodiment of this application may be an indirect coupling or a communication connection between apparatuses, units, or modules in an electrical form, a mechanical form, or another form, and is used for information exchange between the apparatuses, the units, or the modules. The processor 1201 may collaboratively operate with the memory 1202. At least one of the at least one memory may be included in the processor. It should be noted that the memory 1202 is not necessary, and therefore, the memory 1202 is illustrated by using a dashed line in FIG. 12.

Optionally, the memory 1202 may further store data. The processor and the memory may be separately disposed, or may be integrated together. In this embodiment of this application, the memory 1202 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1200 may include instructions 1203 (which may also be referred to as code or programs sometimes). The instructions 1203 may be run on the processor, to enable the communication apparatus 1200 to perform the method described in the foregoing embodiments. The processor 1201 may store data.

Optionally, the communication apparatus 1200 may further include a transceiver 1205 and an antenna 1206. The transceiver 1205 may be referred to as a transceiver unit, a transceiver module, a transceiver machine, a transceiver circuit, a transceiver, an input/output interface, or the like, and is configured to implement a transceiver function of the communication apparatus 1200 over the antenna 1206.

The processor 1201 and the transceiver 1205 described in this application may be implemented in an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

In a possible implementation, the communication apparatus 1200 can correspondingly implement behavior and functions of the first device in the foregoing method embodiments. The communication apparatus 1200 may be the first device, may be a component (for example, a chip or a circuit) used in the first device, or may be a chip or a chip set in the first device, or a part of the chip configured to perform a related method function. For example, the communication apparatus 1200 may perform the steps performed by the first device in any one of FIG. 4 or FIG. 7 to FIG. 10.

The transceiver 1205 is configured to: receive a first signal sent by a second device, and receive a second signal sent by a third device. The processor 1201 may determine a first length based on first time, second time, and delay duration. The first time is time at which the first device receives the first signal. The second time is time at which the first device receives the second signal. The first length is a distance from an intersection point of a first straight line on which a terminal device is located and a first transmission line between a first network device and a second network device to the second network device, and the first straight line is perpendicular to the first transmission line. The terminal device is one of the communication apparatus 1200 and the second device. The first network device is the other one of the communication apparatus 1200 and the second device. The third device is the second network device.

In an optional implementation, the transceiver 1205 is further configured to send a third signal to the second device. The third signal includes second time information and/or the first length. The second time information is determined based on the first time and fifth time, and the fifth time is time at which the communication apparatus 1200 sends the third signal.

In an optional implementation, the transceiver 1205 is further configured to receive third time information sent by the second device. The third time information is a length of a signal transmission path between the first device and the second device.

In an optional implementation, the transceiver 1205 is further configured to receive a vertical distance that is from the terminal device to the first transmission line and that is sent by the second device.

For details, refer to related content in any embodiment in FIG. 4 to FIG. 10. Details are not described herein again.

In some other possible implementations, the communication apparatus 1200 can correspondingly implement behavior and functions of the second device in the foregoing method embodiments. The communication apparatus 1200 may be the second device, may be a component (for example, a chip or a circuit) used in the second device, or may be a chip or a chip set in the second device, or a part of the chip configured to perform a related method function. For example, the communication apparatus 1200 may perform steps performed by the second device in any one of FIG. 4 or FIG. 7 to FIG. 10.

For example, the transceiver 1205 is configured to: send a first signal, and receive a third signal sent by a first device. The third signal includes a first length and/or second time information, and the second time information is determined based on first time and fifth time. The first time is time at which the first device receives the first signal, and the fifth time is time at which the first device sends the third signal. The processor 1201 is configured to determine a vertical distance from a terminal device to a first transmission line between a first network device and a second network device based on the second time information, the first length, sixth time, seventh time, and a first angle. The sixth time is time at which the communication apparatus 1200 receives the third signal, and the seventh time is time at which the communication apparatus 1100 sends the first signal. The first length is a distance from an intersection point of a first straight line on which the terminal device is located and the first transmission line to the second network device, and the first straight line is perpendicular to the first transmission line. The first angle is an angle between the first straight line and a main path of wireless signal transmission from the first transmission line to the terminal device. The terminal device is one of the first device and the communication apparatus 1200, and the first network device is the other one of the first device and the communication apparatus 1200.

In an optional implementation, the transceiver 1205 is further configured to send third time information to the first device. The third time information is a length of a signal transmission path between the second device and the first device.

In an optional implementation, the transceiver 1205 is further configured to send the vertical distance from the terminal device to the first transmission line to the first device.

For details, refer to related content in any embodiment in FIG. 4 to FIG. 10. Details are not described herein again.

In some other possible implementations, the communication apparatus 1200 can correspondingly implement behavior and functions of the second device in the foregoing method embodiments. The communication apparatus 1200 may be the second device, may be a component (for example, a chip or a circuit) used in the third device, or may be a chip or a chip set in the third device, or a part of the chip configured to perform a related method function. For example, the communication apparatus 1200 may perform the steps performed by the third device in any one of FIG. 4 or FIG. 7 to FIG. 10.

For example, the transceiver 1205 is configured to: receive a first signal sent by a first device, and send a second signal to a second device. There is delay duration between sending time of the second signal and time at which the transceiver 1205 receives the first signal. The delay duration may be used to determine a distance from an intersection point of a first straight line on which a terminal device is located and a first transmission line to a second network device. The first transmission line is a transmission line between a first network device and the second network device, and the first straight line is perpendicular to the first transmission line. The terminal device is one of the first device and the second device, and the first network device is the other one of the first device and the second device. The third device is the second network device.

In an optional implementation, after receiving the first signal, the transceiver 1205 sends the second signal after the delay duration elapses.

For details, refer to related content in any embodiment in FIG. 4 to FIG. 10. Details are not described herein again.

Optionally, the communication apparatus 1200 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1200 may include more or fewer components, or some components are integrated, or some components are split. These components may be implemented by hardware, software, or a combination of the software and the hardware.

It should be noted that the communication apparatus in the foregoing embodiments may be a terminal device (or a network device), a circuit, a chip used in a terminal device (or a network device), or may be another combined device, component, or the like that has a function of a terminal (or a network device). When the communication apparatus is the terminal device (or the network device), the transceiver module may be a transceiver, and may include an antenna, a radio frequency circuit, and the like, and the processing module may be a processor, for example, a central processing module (central processing unit, CPU). When the communication apparatus is a component having a function of the terminal device (or the network device), the transceiver module may be a radio frequency unit, and the processing module may be a processor. When the communication apparatus is a chip system, the communication apparatus may be a field programmable gate array (field programmable gate array, FPGA), an application-specific integrated circuit (application-specific integrated circuit, ASIC), a system-on-a-chip (system-on-a-chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to: receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

Embodiments of this application further provide a communication system. Specifically, the communication system includes at least one first device and at least one second device, or further includes at least one third device. For example, the communication system includes the first device and the second device that are configured to implement related functions in any one or more of FIG. 4 to FIG. 10, or further includes the third device that is configured to implement related functions in any one or more of FIG. 4 to FIG. 10. For details, refer to the related descriptions in the foregoing method embodiments. Details are not described herein again.

Embodiments of this application further provide a computer-readable storage medium, including instructions; and when the instructions are run on a computer, the computer is enabled to perform the method performed by the first device in any one or more of FIG. 4 or FIG.7 to FIG. 10. Alternatively, when the instructions are run on a computer, the computer is enabled to perform the method performed by the second device in any one or more of FIG. 4 or FIG.7 to FIG. 10. Alternatively, when the instructions are run on a computer, the computer is enabled to perform the method performed by the third device in any one or more of FIG. 4 or FIG.7 to FIG. 10.

Embodiments of this application further provide a computer program product, including instructions; and when the instructions are run on a computer, the computer is enabled to perform the method performed by the first device in any one or more of FIG. 4 or FIG.7 to FIG. 10. Alternatively, when the instructions are run on a computer, the computer is enabled to perform the method performed by the second device in any one or more of FIG. 4 or FIG.7 to FIG. 10. Alternatively, when the instructions are run on a computer, the computer is enabled to perform the method performed by the third device in any one or more of FIG. 4 or FIG. 7 to FIG. 10.

Embodiments of this application provide a chip system. The chip system includes a processor, and may further include a memory, configured to implement a function of the first device in the foregoing method, or configured to implement a function of the second device in the foregoing method, or configured to implement a function of the third device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in an electronic form, a mechanical form, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk drive, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1.  A positioning method, comprising:

    receiving, by a first device, a first signal sent by a second device,
    receiving, by the first device, a second signal sent by a third device; and
    determining, by the first device, a first length based on first time, second time, and delay duration, wherein the first time is time at which the first device receives the first signal, the second time is time at which the first device receives the second signal, the first length is a distance from an intersection point of a first straight line on which a terminal device is located and a first transmission line between a first network device and a second network device to the second network device, the first straight line is perpendicular to the first transmission line, the terminal device is one of the first device and the second device, the first network device is the other one of the first device and the second device, and the third device is the second network device.

2.  The method according to claim 1, wherein the delay duration is determined based on third time and fourth time, the third time is time at which the third device receives the first signal, and the fourth time is time at which the third device sends the second signal.

3.  The method according to claim 1, wherein the delay duration is preset duration.

4.  The method according to claim 1, wherein the delay duration is a transmission delay between the first network device and the second network device, the transmission delay is determined based on a length of a second transmission line, or the transmission delay is determined based on a length of a second transmission line and delay duration provided by a delayer located on the second transmission line, and the second transmission line is a transmission line between the first network device and the second network device.

5. The method according to claim 2 or 3, wherein the second signal comprises first time information, and the first time information comprises a time difference between the third time and the fourth time; or the first time information comprises the third time and the fourth time.

6. The method according to any one of claims 2 to 5, wherein the delay duration is greater than or equal to a first preset threshold.

7. The method according to any one of claims 1 to 6, wherein position information of the terminal device comprises the first length and/or a second length, and the second length is a difference between the first transmission line and the first length.

8. The method according to any one of claims 1 to 7, wherein the method further comprises:
sending, by the first device, the first length and/or a second length to the second device, wherein the second length is a difference between the first transmission line and the first length.

9. The method according to any one of claims 1 to 8, wherein the method further comprises:
sending, by the first device, a third signal to the second device, wherein the third signal comprises second time information and/or the first length, the second time information is determined based on the first time and fifth time, and the fifth time is time at which the first device sends the third signal.

10. The method according to claim 9, wherein the method further comprises:
receiving, by the first device, third time information sent by the second device, wherein the third time information is determined based on the second time information, sixth time, and seventh time, the sixth time is time at which the second device receives the third signal, and the seventh time is time at which the second device sends the first signal.

11. The method according to claim 10, wherein the method further comprises:
determining, by the first device, a vertical distance from the terminal device to the first transmission line based on the third time information, the first length, and a first angle, wherein the first angle is an angle between the first straight line and a main path of wireless signal transmission from the first transmission line to the terminal device.

12. The method according to claim 9, wherein the method further comprises:
receiving, by the first device, a vertical distance that is from the terminal device to the first transmission line and that is sent by the second device, wherein the position information of the terminal device further comprises the vertical distance.

13. The method according to any one of claims 1 to 12, wherein the determining, by the first device, a first length based on first time, second time, and delay duration comprises:
determining, by the first device, the first length according to a first formula, wherein the first formula satisfies:
$d2=[(t5-t2)-T] \times c1/2$, wherein d2 is the first length, t5 is the second time, t2 is the first time, T is the delay duration, and c1 is a transmission speed of an electromagnetic wave on the first transmission line.

14. A positioning method, comprising:

sending, by a second device, a first signal;
receiving, by the second device, a third signal sent by a first device, wherein the third signal comprises a first length and/or second time information, the second time information is determined based on first time and fifth time, the first time is time at which the first device receives the first signal, and the fifth time is time at which the first device sends the third signal; and
determining, by the second device, a vertical distance from a terminal device to a first transmission line between a first network device and a second network device based on the second time information, the first length, sixth time, seventh time, and a first angle, wherein the sixth time is time at which the second device receives the third signal, and the seventh time is time at which the second device sends the first signal, wherein
the first length is a distance from an intersection point of a first straight line on which the terminal device is located and the first transmission line to the second network device, and the first straight line is perpendicular to the first transmission line; the first angle is an angle between the first straight line and a main path of wireless signal transmission from the first transmission line to the terminal device; and the terminal device is one of the first device and the second device, and the first network device is the other one of the first device and the second device.

15. The method according to claim 14, wherein the method further comprises:
sending, by the second device, third time information to the first device, wherein the third time information is determined based on the second time information, the sixth time, and the seventh time.

16. The method according to claim 15, wherein the method further comprises:
determining, by the second device, the vertical distance from the terminal device to the first transmission line based on the third time information, the first length, and the first angle.

17. The method according to any one of claims 14 to 16, wherein the method further comprises:
sending, by the second device, the vertical distance from the terminal device to the first transmission line to the first device.

18. The method according to any one of claims 14 to 17, wherein the determining, by the second device, a vertical distance from a terminal device to a first transmission line between a first network device and a second network device based on the second time information, the first length, sixth time, seventh time, and a first angle comprises:
determining, by the second device, the vertical distance based on a second formula, wherein the second formula satisfies:
$(t7-t1)-(t5-t2)=2\times[(d1-h\times\tan(\theta))/c1+(h/\cos(\theta))/c2]$, wherein t7 is the sixth time, t5 is the fifth time, t2 is the first time, t1 is the seventh time, d1 is a difference between the first transmission line and the first length, c1 is a transmission speed of an electromagnetic wave on the first transmission line, c2 is a transmission rate of an electromagnetic wave in the air, $\theta$ is the first angle, and h is the vertical distance.

19. A positioning method, comprising:

receiving, by a third device, a first signal sent by a first device; and
sending, by the third device, a second signal to a second device, wherein there is delay duration between sending time of the second signal and time at which the third device receives the first signal, the delay duration is used to determine a distance from an intersection point of a first straight line on which a terminal device is located and a first transmission line to a second network device, the first transmission line is a transmission line between a first network device and the second network device, the first straight line is perpendicular to the first transmission line, the terminal device is one of the first device and the second device, the first network device is the other one of the first device and the second device, and the third device is the second network device.

20. The method according to claim 19, wherein after receiving the first signal, the third device sends the second signal after the delay duration elapses.

21. The method according to claim 19, wherein the delay duration is a transmission delay between the first network device and the second network device, the transmission delay is determined based on a length of a second transmission line, or the transmission delay is determined based on a length of a second transmission line and delay duration provided by a delayer located on the second transmission line, and the second transmission line is a transmission line between the first network device and the second network device.

22. The method according to any one of claims 19 to 21, wherein the delay duration is preset duration.

23. The method according to any one of claims 19 to 22, wherein the delay duration is greater than or equal to a first preset threshold.

24. A communication apparatus, comprising a processing module and a transceiver module, wherein

the transceiver module is configured to: receive a first signal sent by a second device, and receive a second signal sent by a third device; and
the processing module is configured to determine a first length based on first time, second time, and delay duration, wherein the first time is time at which the communication apparatus receives the first signal, the second time is time at which the communication apparatus receives the second signal, the first length is a distance from an intersection point of a first straight line on which a terminal device is located and a first transmission line between a first network device and a second network device to the second network device, the first straight line is perpendicular to the first transmission line, the terminal device is one of the communication apparatus and the second device, the first network device is the other one of the communication apparatus and the second device, and the third device is the second network device.

25. The apparatus according to claim 24, wherein the delay duration is determined based on third time and fourth time, the third time is time at which the third device receives the first signal, and the fourth time is time at which the third device sends the second signal.

26. The apparatus according to claim 24, wherein the delay duration is preset duration.

27. The apparatus according to claim 24, wherein the delay duration is a transmission delay between the first network device and the second network device, the transmission delay is determined based on a length of a second transmission line, or the transmission delay is determined based on a length of a second transmission line and delay duration provided by a delayer located on the second transmission line, and the second transmission line is a transmission line between the first network device and the second network device.

28. The apparatus according to claim 25 or 26, wherein the second signal comprises first time information, and the first time information comprises a time difference between the third time and the fourth time; or the first time information comprises the third time and the fourth time.

29. The apparatus according to any one of claims 25 to 28, wherein the delay duration is greater than or equal to a first preset threshold.

30. The apparatus according to any one of claims 24 to 29, wherein position information of the terminal device comprises the first length and/or a second length, and the second length is a difference between the first transmission line and the first length.

31. The apparatus according to any one of claims 24 to 30, wherein the transceiver module is further configured to: send the first length and/or a second length to the second device, wherein the second length is a difference between the first transmission line and the first length.

32. The apparatus according to any one of claims 24 to 31, wherein the transceiver module is further configured to: send a third signal to the second device, wherein the third signal comprises second time information and/or the first length, the second time information is determined based on the first time and fifth time, and the fifth time is time at which the first device sends the third signal.

33. The apparatus according to claim 32, wherein the transceiver module is further configured to: receive third time information sent by the second device, wherein the third time information is determined based on the second time information, sixth time, and seventh time, the sixth time is time at which the second device receives the third signal, and the seventh time is time at which the second device sends the first signal.

34. The apparatus according to claim 33, wherein the processing module is further configured to: determine a vertical distance from the terminal device to the first transmission line based on the third time information, the first length, and a first angle, wherein the first angle is an angle between the first straight line and a main path of wireless signal transmission from the first transmission line to the terminal device.

35. The apparatus according to claim 32, wherein the transceiver module is further configured to: receive a vertical distance that is from the terminal device to the first transmission line and that is sent by the second device, wherein the position information of the terminal device further comprises the vertical distance.

36. The apparatus according to any one of claims 24 to 35, wherein that the processing module determines the first length based on the first time, the second time, and the delay duration comprises: determining the first length according to a first formula, wherein the first formula satisfies: $d2=[(t5-t2)-T]\times c1/2$, wherein d2 is the first length, t5 is the second time, t2 is the first time, T is the delay duration, and c1 is a transmission speed of an electromagnetic wave on the first transmission line.

37. A communication apparatus, comprising a processing module and a transceiver module, wherein

the transceiver module is configured to: send a first signal and receive a third signal sent by a first device, wherein the third signal comprises a first length and/or second time information, the second time information is determined based on first time and fifth time, the first time is time at which the first device receives the first signal, and the fifth time is time at which the first device sends the third signal; and

the processing module is configured to determine a vertical distance from a terminal device to a first transmission line between a first network device and a second network device based on the second time information, the first length, sixth time, seventh time, and a first angle, wherein the sixth time is time at which the communication apparatus receives the third signal, and the seventh time is time at which the communication apparatus sends the first signal, wherein

the first length is a distance from an intersection point of a first straight line on which the terminal device is located and the first transmission line to the second network device, and the first straight line is perpendicular to the first transmission line; the first angle is an angle between the first straight line and a main path of wireless signal transmission from the first transmission line to the terminal device; and the terminal device is one of the first device and the communication apparatus, and the first network device is the other one of the first device and the communication apparatus.

38. The apparatus according to claim 37, wherein the transceiver module is further configured to:
send third time information to the first device, wherein the third time information is determined based on the second time information, the sixth time, and the seventh time.

39. The apparatus according to claim 38, wherein the processing module is further configured to:
determine the vertical distance from the terminal device to the first transmission line based on the third time information, the first length, and the first angle.

40. The apparatus according to any one of claims 37 to 39, wherein the transceiver module is further configured to:
send the vertical distance from the terminal device to the first transmission line to the first device.

41. The apparatus according to any one of claims 37 to 40, wherein that the processing module determines the vertical distance from the terminal device to the first transmission line between the first network device and the second network device based on the second time information, the first length, the sixth time, the seventh time, and the first angle comprises:
determining the vertical distance based on a second formula, wherein the second formula satisfies:
$(t7-t1)-(t5-t2)=2\times[(d1-h\times\tan(\theta))/c1+(h/\cos(\theta))/c2]$, wherein t7 is the sixth time, t5 is the fifth time, t2 is the first time, t1 is the seventh time, d1 is a difference between the first transmission line and the first length, c1 is a transmission speed of an electromagnetic wave on the first transmission line, c2 is a transmission rate of an electromagnetic wave in the air, $\theta$ is the first angle, and h is the vertical distance.

42. A communication apparatus, comprising a processing module and a transceiver module, wherein
the transceiver module is configured to receive a first signal sent by a first device; the processing module is configured to determine a second signal; and the transceiver module is further configured to send the second signal to a second device, wherein there is delay duration between sending time of the second signal and time at which the transceiver module receives the first signal, the delay duration is used to determine a distance from an intersection point of a first straight line on which a terminal device is located and a first transmission line to a second network device, the first transmission line is a transmission line between a first network device and the second network device, the first straight line is perpendicular to the first transmission line, the terminal device is one of the first device and the second device, the first network device is the other one of the first device and the second device, and a third device is the second network device.

43. The apparatus according to claim 42, wherein after receiving the first signal, the transceiver module is further configured to send the second signal after the delay duration elapses.

44. The apparatus according to claim 42, wherein the delay duration is a transmission delay between the first network device and the second network device, the transmission delay is determined based on a length of a second transmission line, or the transmission delay is determined based on a length of a second transmission line and delay duration provided by a delayer located on the second transmission line, and the second transmission line is a transmission line between the first network device and the second network device.

45. The apparatus according to any one of claims 42 to 44, wherein the delay duration is preset duration.

46. The apparatus according to any one of claims 42 to 45, wherein the delay duration is greater than or equal to a first preset threshold.

47. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 13, or enable the communication apparatus to perform the method according to any one of claims 14 to 18, or enable the communication apparatus to perform the method according to any one of claims 19 to 23.

48. A computer-readable storage medium, wherein the computer-readable storage medium stores a computer program; and when the computer program is executed by a computer, the computer is enabled to perform the method according to any one of claims 1 to 13, or the computer is enabled to perform the method according to any one of claims 14 to 18, or the computer is enabled to perform the method according to any one of claims 19 to 23.

49. A computer program product, wherein the computer program product stores a computer program; and when the computer program is executed by a computer, the computer is enabled to perform the method according to any one of claims 1 to 13, or the computer is enabled to perform the method according to any one of claims 14 to 18, or the computer is enabled to perform the method according to any one of claims 19 to 23.

50. A communication system, comprising a first device, a second device, and a third device, wherein the first device is configured to perform the method according to any one of claims 1 to 13, the second device is configured to perform the method according to any one of claims 14 to 18, or the third device is configured to perform the method according to any one of claims 19 to 23.

FIG. 1

FIG. 2

FIG. 3

| First device | Second device | Second network device (third device) |

S401: First signal

S402: Second signal

S403

Determine a first length based on first time, second time, and delay duration

First length and/or second length

S404: Third signal

First case

S405a

Determine a vertical distance from a terminal device to a first transmission line based on second time information, the first length, sixth time, seventh time, and a first angle

S406a: Vertical distance from the terminal device to the first transmission line

S405b: Third time information

S406b

Determine a vertical distance from a terminal device to a first transmission line based on the third time information, the first length, and a first angle

Second case

S407b: Vertical distance from the terminal device to the first transmission line

FIG. 4

FIG. 5

FIG. 6

EP 4 503 656 A1

| First network device | Terminal device | Second network device |
|---|---|---|

t1

S701: First signal

S701: First signal  t2  t3

S702: Second signal  t4

t5

S703: Determine a first length based on a first time, a second time, and delay duration

t6

Third signal

t7

FIG. 7

FIG. 8

FIG. 9

Terminal device ... First network device

S1001: First signal

t1

S1001: First signal

t2

Delay duration

Second signal

t3

S1002: Determine a first length based on a first time, a second time, and the delay duration

t4

Third signal

t5

FIG. 10

1100

1110

1120

Processing module

Transceiver module

FIG. 11

FIG. 12

<table>
<tr><td colspan="2">**INTERNATIONAL SEARCH REPORT**</td><td>International application No.<br>**PCT/CN2023/082654**</td></tr>
</table>

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VEN; WPABS; CNTXT; USTXT; EPTXT; CNABS; 3GPP: 定位, 位置, 信号, 时间, 延迟, 长度, 距离, 传输线, 直线, 交点, position, locate, signal, time, delay, length, distance, transmission line, straight line, intersection point

**C. DOCUMENTS CONSIDERED TO BE RELEVANT**

| Category* | Citation of document, with indication, where appropriate, of the relevant passages | Relevant to claim No. |
|---|---|---|
| A | CN 103974200 A (BAODING GALAXY ELECTRONIC TECHNOLOGY CO., LTD.) 06 August 2014 (2014-08-06)<br>entire document | 1-50 |
| A | CN 107124697 A (FUJIAN NORMAL UNIVERSITY) 01 September 2017 (2017-09-01)<br>entire document | 1-50 |
| A | WO 2022046474 A1 (QUALCOMM INC.) 03 March 2022 (2022-03-03)<br>entire document | 1-50 |
| A | WO 2022055772 A2 (QUALCOMM INC.) 17 March 2022 (2022-03-17)<br>entire document | 1-50 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 May 2023** | **24 May 2023** |

| Name and mailing address of the ISA/CN | Authorized officer |
|---|---|
| China National Intellectual Property Administration (ISA/CN)<br>China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

International application No.

**PCT/CN2023/082654**

| Patent document cited in search report | | | Publication date (day/month/year) | Patent family member(s) | | | Publication date (day/month/year) |
|---|---|---|---|---|---|---|---|
| CN | 103974200 | A | 06 August 2014 | None | | | |
| CN | 107124697 | A | 01 September 2017 | None | | | |
| WO | 2022046474 | A1 | 03 March 2022 | KR | 20230054663 | A | 25 April 2023 |
| | | | | IL | 276869 | A | 01 March 2022 |
| | | | | BR | 112023002576 | A2 | 14 March 2023 |
| WO | 2022055772 | A2 | 17 March 2022 | WO | 2022055772 | A3 | 05 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210419306